# EUROPÄISCHE PATENTANMELDUNG

(11) **EP 1 527 749 A2**
(43) Veröffentlichungstag der Anmeldung: **04.05.2005**
(21) Anmeldenummer: 04016382.6
(22) Anmeldetag: 13.07.2004
(51) Int. Cl.: A61C 8/00

(54) **In einen menschlichen Kiefer endostal einschraubbares Dentalimplantat zur Aufnahme und Fixierung eines Zahnersatzes**

(30) Priorität: 30.10.2003 DE 10350944; 05.12.2003 DE 10356920
(71) Anmelder: Lippe, Rainer, 34134 Kassel (DE)
(72) Erfinder: Lippe, Rainer, 34134 Kassel (DE)
(74) Vertreter: WALTHER, WALTHER & HINZ Patentanwälte

(57) **Zusammenfassung**

Gegenstand der Erfindung ist ein in einen menschlichen Kiefer endostal einschraubbares Dentalimplantat zur Aufnahme und Fixierung eines Zahnersatzes, mit einem ein Außengewinde aufweisenden Grundkörper (10). Eine bessere Verankerung des Dentalimplantates im Kiefer wird dadurch erreicht, dass das Außengewinde in einem ersten Teilbereich als Schneidgewinde (22), in einem zweiten Teilbereich als Kompressionsgewinde (20) und in einem dritten Teilbereich als Kortikalgewinde (18) ausgebildet ist, wobei das Schneidgewinde (22) in einem distalen Bereich des Grundkörpers (10) angeordnet ist, während das Kortikalgewinde (18) in einem kortikalen Bereich des Grundkörpers (10) angeordnet ist der in der Kortikalis des Kieferknochens (1) zur Anlage kommt, während das Kompressionsgewinde (20) in einem mittleren Bereich zwischen dem Schneidgewinde (22) und dem Kortikalgewinde (18) angeordnet ist.

## Beschreibung

Die vorliegende Erfindung betrifft ein in einen menschlichen Kiefer endostal einschraubbares Dentalimplantat zur Aufnahme und Fixierung eines Zahnersatzes, insbesondere einer Krone, einer Brücke oder dergleichen, mit einem ein Außengewinde aufweisenden Grundkörper, wie sie als Ersatz für einen nicht mehr vorhandenen Zahn eingesetzt werden.

Aus dem DE 203 04 755 U1 und aus der EP 0 282 789 B1 sind Dentalimplantate bekannt, auf deren Grundkörper ein Außengewinde ausgebildet ist. Dieses Außengewinde ist gleichzeitig als Schneide- und Kompressionsgewinde ausgelegt, so dass das Dentalimplantat auf diese Weise in einen mit einem Implantatbett vorbereiteten Kiefer einschraubbar ist. Zur Erleichterung der Schneidwirkung des Gewindes ist am distalen Ende mindestens ein Freistich vorgesehen, welcher sich in etwa über die ersten zwei Gewindegänge erstreckt. Der Außendurchmesser des Außengewindes ist über die gesamte Länge des Grundkörpers gesehen gleich dem Durchmesser eines zylindrischen Pfostenlagers, welches an der Kordikalis des Kiefers zur Anlage kommt, während der Grundkörper sich zum distalen Ende hin konisch verjüngt.

Es entspricht ständiger Praxis, dass der behandelnde Chirurg im Kiefer des Patienten zunächst einmal durch Aufbohren des Knochens ein Implantatbett schafft, in welches dann das Dentalimplantat eingeschraubt wird. Dabei reicht das Implantatbett vom harten Knochenrand, der Kortikalis, bis tief ins Innere des Kiefers, wo der Knochen eher spongiös ausgebildet ist. Der lichte Durchmesser des Implantatbettes ist dabei zumindest im bereich der Kortikalis gleich dem Außendurchmesser des Dentalimplantat, damit das Dentalimplantat passgenau im Implantatbett gehalten wird. Nach erfolgter Implantation greift das Dentalimplantat mit seinem Außengewinde in den spongiösen Knochen ein, während das Dentalimplantat mit seinem zylindrischen Pfostenlager in der Kortikalis des Kieferknochens zur Anlage kommt. Da das Implantatbett in der Regel den gleichen Durchmesser wie das Pfostenlager aufweist, kommt das Dentalimplantat hier passgenau zur Anlage.

Nachdem das Dentalimplantat beim Patienten implantiert ist, wird häufig eine gewisse Zeit, in der Regel mehrere Monate, zugewartet, bevor die eigentliche Krone, Brücke oder dergleichen auf das Dentalimplantat aufgebracht wird. Hierdurch soll dem weichen, spongiösen Knochen Zeit gegeben werden, neue und harte Knochensubstanz zu bilden, um das Dentalimplantat im Knochen zuverlässig zu halten. Erst wenn der Kiefer genügend Knochen nachgebildet hat und das Dentalimplantat somit genügend Halt besitzt, wird in einer weiteren Behandlung der eigentliche Zahnersatz eingesetzt.

Davon ausgehend liegt der vorliegenden Erfindung die Aufgabe zu Grunde, ein Dentalimplantat der eingangs genannten Art zu schaffen, welches unmittelbar nach der Implantation fest im Kiefer verankert ist.

Als technische Lösung dieser Aufgabe wird erfindungsgemäß ein Dentalimplantat gemäß den Merkmalen des Anspruches 1 vorgeschlagen. Vorteilhafte Weiterbildungen dieser Vorrichtung sind den Unteransprüchen zu entnehmen.

Ein nach dieser technischen Lehre ausgebildetes Dentalimplantat hat den Vorteil, dass das Kortikalgewinde im Bereich der Kortikalis des Kieferknochens in diesen eingreift, insbesondere wenn das Kortikalgewinde extendierend auf dem Grundkörper angebracht ist, und somit der harte Rand des Kieferknochens zur zusätzlichen Befestigung des Dentalimplantates genutzt werden kann. Dies bewirkt in der Praxis, dass ein derart eingesetztes Dentalimplantat sofort genügend Halt aufweist, um in einer einzigen Behandlung auch die Krone oder die Brücke anzubringen. Somit wird dem Patienten eine zusätzliche Behandlungssitzung erspart.

Ein weiterer Vorteil besteht darin, dass ein solches Dentalimplantat auch bei einem geschwächten oder beschädigten Kieferknochen sehr guten Halt findet.

Das Kortikalgewinde als selbstschneidendes Gewinde auszubilden hat den Vorteil, dass damit ein zuverlässiges Eingreifen des Kortikalgewindes in den Knochen erreicht wird.

In einer bevorzugten Ausführungsform ist das Kortikalgewinde außen zylindrisch ausgebildet. Hierdurch wird erreicht, dass das Kortikalgewinde stets gleich über den Grundkörper übersteht, und somit zuverlässig in den Kieferknochen eingreift. Dieser Vorteil wird noch dadurch verstärkt, dass das Kortikalgewinde über den Grundkörper extendiert, dass heißt auf der Oberfläche des Grundkörpers aufgebracht ist, wobei der Durchmesser des Grundkörpers dem Durchmesser des Implantatbettes entspricht, so dass das extendierende Kortikalgewinde im Bereich des Kieferknochens angesiedelt ist.

In einer weiteren, bevorzugten Ausführungsform weist das Kortikalgewinde zwei unabhängige Gewindegänge auf. Durch diese zusätzliche Verankerungsmöglichkeit wird der Halt des Dentalimplantates im Kiefer weiter verbessert.

In einer anderen, bevorzugten Ausführungsform ist das Schneidgewinde mit dem Kompressionsgewinde zu einem zusammenhängenden Gewinde verbunden. Hiermit wird das Eindrehen des Dentalimplantates in das Implantatbett erleichtert, wobei sich zunächst das Schneidgewinde in den Kieferknochen einschneidet, bevor das sich direkt anschließende Kompressionsgewinde in der durch das Schneidgewinde vorbereiteten Kerbe eine Kompression auf den Knochen ausübt und somit die Verhärtung des Knochens beschleunigt, was im Ergebnis zu einem besseren Halt des Dentalimplantates führt.

In einer besonders bevorzugten Ausführungsform ist der Grundkörper in seinem distalen und/oder in seinem mittleren Bereich im Gegensatz zum kortikalen Bereich sich konisch zum distalen Ende hin verjüngend ausgebildet. Dabei beträgt die Konizität 3° bis 30°, vorzugsweise 10°. Dies hat den Vorteil, dass der Außendurchmesser des Dentalimplantates an keiner Stelle größer als der Durchmesser des Grundkörpers im kortikalen Bereich ist, so dass das Dentalimplantat in einfacher Weise und ohne auf Hindernisse zu stoßen in das Implantatbett eingesetzt werden kann, wobei der distale Bereich an der Kortikalis des Kieferknochens vorbeigeführt wird und sich erst im spongiösen Teil des Kieferknochens in diesen einschneidet.

In einer besonders vorteilhaften Ausführungsform ist das Schneid- und/oder das Kompressionsgewinde außen sich konisch zum distalen Ende hin verjüngend ausgebildet, wobei die Konizität 0,1° bis 5°, vorzugsweise 3° beträgt. Dies hat den Vorteil, dass das im distalen Bereich ausgebildete Schneidgewinde auf Grund der ihm innenwohnenden Durchmesservergrößerung auch eine gewisse Kompression auf den Knochen ausübt und somit eine optimale Verankerung des Dentalimplantates im Knochen erreicht wird.

In einer anderen, vorteilhaften Weiterbildung sind im Bereich des Schneidgewindes eine oder mehrere Freischnitte ausgebildet. Dabei beträgt der Freischnittwinkel ε ideaterweise 3° bis 30°, vorzugsweise 10°. Mit einem solchen Freischnitt wird vorteilhafterweise erreicht, dass sich die einzelnen Gewindegänge des Schneidgewindes besser in den Knochen einbringen können, um somit eine saubere Kerbe für das Gewinde auszubilden. Dabei hat es sich als vorteilhaft erwiesen, diesen Freischnitt über den gesamten distalen Bereich, das heißt, über die gesamte Länge des Schneidgewindes auszubilden.

In noch einer weiteren bevorzugten Ausführungsform ist das Kompressionsgewinde kleiner als das Schneidgewinde und/oder das Pfostenlager ausgeführt. Dies hat den Vorteil, dass das Kompressionsgewinde nicht soweit in den Knochen hineinreicht wie das zuvor diese Stelle passierende Schneidgewinde, so dass das Kompressionsgewinde auf den Knochen ein wohl dosierten Druck ausübt ohne den Knochen an diese Stelle zu deformieren.

Weitere Vorteile des erfindungsgemäßen Dentalimplantates ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine teilweise geschnitten dargestellte Seitenansicht einer ersten Ausführungsform eines erfindungsgemäßen Dentalimplantates geschnitten entlang Linie I - I in Fig. 2;
- Fig. 2: eine Unteransicht des Dentalimplantates gemäß Fig. 1 entsprechend Linie II - II in Fig. 1;
- Fig. 3: eine Explosionsdarstellung des Dentalimplantates gemäß Fig. 1 und einen Ausschnitt eines Kiefers mit einem vorbereitetem Implantatbett;
- Fig. 4: ein in das Implantatbett gemäß Fig. 3 eingesetzten Dentalimplantat gemäß Fig. 1;
- Fig. 5: eine teilweise geschnitten dargestellte Seitenansicht einer zweiten Ausführungsform eines erfindungsgemäßen Dentalimplantates;
- Fig. 6a: eine teilweise geschnitten dargestellte Seitenansicht einer dritten Ausführungsform eines erfindungsgemäßen Dentalimplantates;
- Fig. 6b: eine Detailvergrößerung gemäß Linie B - B des Dentalimplantates gemäß Fig. 6a;
- Fig. 6c: eine Detailvergrößerung gemäß Linie C - C des Dentalimplantates gemäß Fig. 6a;
- Fig. 7: ein in das Implantatbett eingesetztes Dentalimplantat gemäß Fig. 6.

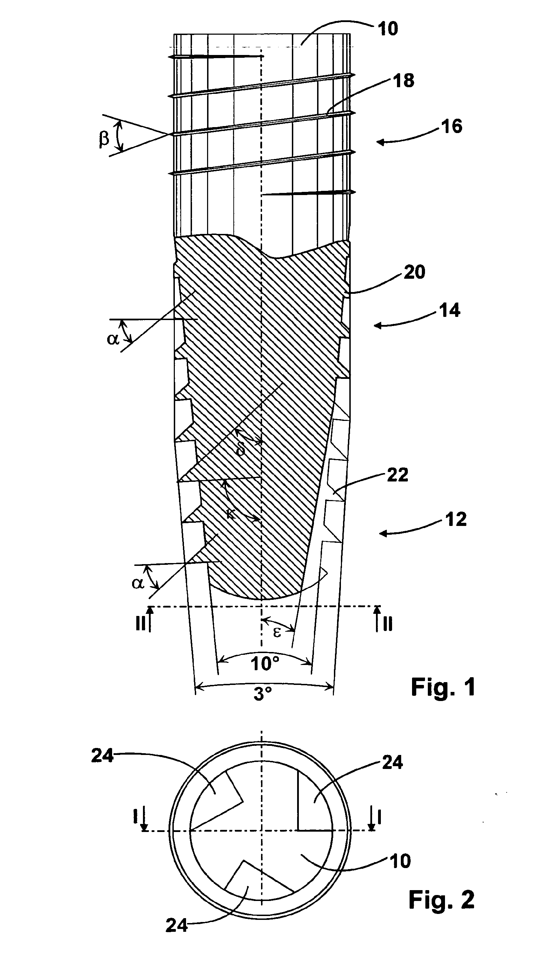

In den Figuren 1 und 2 ist eine erste Ausführungsform eines erfindungsgemäßen Dentalimplantates abgebildet, welches einen Grundkörper 10 aufweist, auf dessen Oberfläche ein Außengewinde ausgebildet ist. Dieser Grundkörper 10 lässt sich in drei Teilbereiche unterteilen, und zwar in einen distalen Bereich 12, einen mittleren Bereich 14 und einen kortikalen Bereich 16. Auf einer hier nicht dargestellten Stirnseite des Grundkörpers 10 im kortikalen Bereich 16 ist eine Aufnahme, insbesondere ein Innenachtkant, ausgebildet, in den weitere Bauteile eingesetzt werden können.

Der Grundkörper 10 ist in seinem kortikalen Bereich 16 zylindrisch ausgebildet, wobei auf die Oberfläche des Grundkörpers 10 ein Kortikalgewinde 18 extendierend aufgebracht ist. Dabei ist der Durchmesser des kortikalen Bereiches 16 des Grundkörpers 10 gleich dem Durchmesser des vom Chirurgen geschaffenen Implantatbettes im Kiefer, so dass das über den Grundkörper 10 und über die Außenmaße der anderen Gewinde extendierend überstehende Kortikalgewinde 18 zuverlässig in den Kiefer eingreifen kann. Dieses Kortikalgewinde 18 hat eine Flankentiefe von 0,05 mm und besitzt einen Flankenwinkel β von 80°. Das Kortikalgewinde 18 ist dabei als selbstschneidendes Gewinde ausgebildet.

Der sich an den kortikalen Bereich 16 anschließende mittlere Bereich 14 und der sich an den mittleren Bereich 14 anschließende distale Bereich 12 des Grundkörpers 10 sind im Gegensatz zum kortikalen Bereich 16 konisch ausgebildet, mit einer Konizität von 10°. Dabei ist im mittleren Bereich 14 ein Kompressionsgewinde 20 und im distalen Bereich ein Schneidgewinde 22 ausgebildet, deren Gewindegänge derart miteinander verbunden sind, dass ein zusammenhängendes Gewinde entsteht. Dabei weisen sowohl das Schneidgewinde 22, als auch das Kompressionsgewinde 20 einen Flankenwinkel α von 40° auf. Während das Kompressionsgewinde 20 außen stumpfkantig ausgebildet ist, ist das Schneidgewinde 22 außen scharfkantig ausgebildet, damit sich somit die einzelnen Gewindegänge in den umgebenden Knochen einschneiden können.

Während das Kompressionsgewinde 20 derart ausgelegt ist, dass die Außenmaße des Kompressionsgewindes 20 zylindrisch wirken, weist das Schneidgewinde 22 außen eine Konizität von 3° auf.

Im distalen Bereich 12 des Grundkörpers 10 sind über den Umfang verteilt drei Freischnitte 24 ausgebildet, die sich über die gesamte Länge des distalen Bereiches 12 erstrecken. Dabei ist der Freischnitt 24 ebenfalls angeschrägt ausgebildet und besitzt einen Freischnittwinkel ε von 10°.

Über die gesamte Länge des Dentalimplantates aus gesehen, erstreckt sich das Schneidgewinde 22, das Kompressionsgewinde 20 und das Kortikalgewinde 18 über jeweils etwa 1/3 des Dentalimplantates.

Das in den Fig. 1 und 2 beschriebene Dentalimplantat wird in ein im Kieferknochen 26 vorbereites Implantatbett 28 eingesetzt, welches sich stufenweise verjüngend ausgebildet ist. Das Implantatbett 28 weist drei im wesentlichen zylindrische Zonen 30, 32, 34 unterschiedlicher Durchmesser auf, wobei die äußere Zone 30 einen lichten Durchmesser d aufweist, der dem Durchmesser des Grundkörpers 10 im kortikalen Bereich 16 des Dentalimplantates entspricht. Somit ist gewährleistet, dass das über den Grundkörper 10 extendierende Kortikalgewinde 18 zuverlässig in den Kieferknochen eingreift. Der Durchmesser der mittleren Zone 32 und der Durchmesser der inneren Zone 34 sind so gewählt, dass diese stets kleiner als der Außendurchmesser des Schneide- 22 bzw. Kompressionsgewindes 20 sind, damit auch hier das jeweilige Gewinde 20, 22 zuverlässig in den Kieferknochen 26 eingreift.

Die Länge der obersten Zone entspricht in etwa 1/3 der Gesamtlänge des Implantatbettes 28, während die mittlere Zone 32 in etwa 1/4 des Implantatbettes 28 ausmacht, so dass sich die innere Zone 34 über 5/12 des Implantatbettes 28 erstreckt. Hierdurch wird ein guter Eingriff und eine gute Kompression des Dentalimplantates im Kieferknochen 26 erreicht.

Ein solches Implantatbett 28 wird mit einem hier nicht näher dargestellten Stufenbohrer erstellt.

Ein Vorteil dieses Implantatbettes 28 in Verbindung mit diesem Dentalimplantat besteht darin, dass durch die Konizität des Schneidgewindes 22 der Außendurchmesser des Dentalimplantates zumindest in Höhe des distalen Bereiches kleiner als der Durchmesser d der äußeren Zone 30 ist. Hierdurch ist es möglich, das der behandelnde Arzt nach Erstellung des Implantatbettes 28 das Dentalimplantat zunächst lose in das Implantatbett 28 einführt, wobei das Dentalimplantat bereits in etwa im Implantatbett 28 gehalten wird, so dass der Arzt nun in Ruhe die erforderlichen Werkzeuge ansetzen kann und das Dentalimplantat ausrichten kann, bevor das Dentalimplantat unter Kraftaufwendung in den Kieferknochen eingeschraubt wird.

Nachfolgend wird die Anwendung eines solchen erfindungsgemäßen Dentalimplantates kurz erläutert:

Soll bei einem Patienten ein kranker oder beschädigter Zahn ersetzt werden, ist es allgemein üblich, hierfür anstelle dieses Zahnes ein Dentalimplantat zu verwenden. Dabei bohrt der behandelnde Chirurg zunächst ein Implantatbett in den Kiefer des Patienten, wobei der Durchmesser dieses Implantatbettes stufenweise kleiner wird, je tiefer das Implantatbett in den Kiefer hineinreicht. Dabei wird der Durchmesser des Implantatbettes im Bereich der Kortikalis des Kieferknochens so gewählt, dass dieser dem Durchmesser des Dentalimplantates im kortikalen Bereich 16 entspricht. Anschließend wird das Dentalimplantat in das Implantatbett eingeschraubt, wobei das Dentalimplantat mit seinem distalen Bereich 12 zuerst in das Implantatbett eingeführt wird. Da der Außendurchmesser des Schneidgewindes 22 aufgrund der Konizität kleiner als der Durchmesser des Implantatbettes in der Kortikalis ist, kann das Dentalimplantat ohne auf Widerstände zu stoßen zumindest teilweise in das Implantatbett eingeführt werden. Sobald das Dentalimplantat auf noch vorhandenes Knochenmaterial trifft, wird das Dentalimplantat um seine Längsachse gedreht, so dass das Schneidgewinde 22 in den Knochen einschneidet. Durch die Konizität des Schneidgewindes von 3° wird erfindungsgemäß erreicht, dass nach dem Einschneiden des Schneidgewindes 22 in den spongiösen Teil des Kieferknochens auf Grund der Durchmesservergrößerung des Dentalimplantates eine gewisse Kompression ausgeübt wird, so dass das Dentalimplantat bereits in diesem Stadium einen sehr guten Halt im Kiefer besitzt. Wird das Dentalimplantat nun weiter in den Kiefer hineingeschraubt, so wird auf Grund des gleichmäßigen Übergangs von Schneidgewinde 22 zum Kompressionsgewinde 20 ein sanftes Einschrauben ermöglicht, wobei das Kompressionsgewinde 20 in diesem Bereich den spongiösen Knochen ein wenig zusammendrückt und verdichtet, so dass ein sehr guter Halt des Dentalimplantates erreicht wird. Wird das Dentalimplantat noch weiter eingedreht, so greift das über den Grundkörper 10 überstehende Kortikalgewinde 18 in die sehr fest und gut haltende Kortikalis des Kieferknochens ein und bewirkt eine zusätzliche Verankerung des Dentalimplantates im Kiefer.

Durch den sich über die gesamte Länge des distalen Bereiches 12 erstreckenden Freischnitt 24 wird das Einschneiden des Schneidgewindes 12 in den Knochen erleichtert.

Durch die Verankerung des Dentalimplantates mittels des Kortikalgewindes 18 in der Kortikalis des Kieferknochens wird sofort nach Beendigung der Implantation ein sehr guter Halt des Dentalimplantates im Kiefer erreicht. Dies hat zur Folge, dass die eigentliche Krone, Brücke oder ein sonstiger Zahnersatz unmittelbar nach dem implantieren des Dentalimplantates angebracht werden kann, so dass dem Patienten eine zweite Behandlung erspart wird. Wenn dann im Lauf der Zeit der spongiöse Knochen im inneren des Kiefers verhärtet und nachwächst, wird der Haft des Dentalimplantates noch weiter erhöht, so dass ein langfristiger und dauerhafter Zahnersatz erreicht ist.

In einer anderen, hier nicht dargestellten Ausführungsform ist das Kortikalgewinde als doppelläufiges Gewinde ausgelegt.

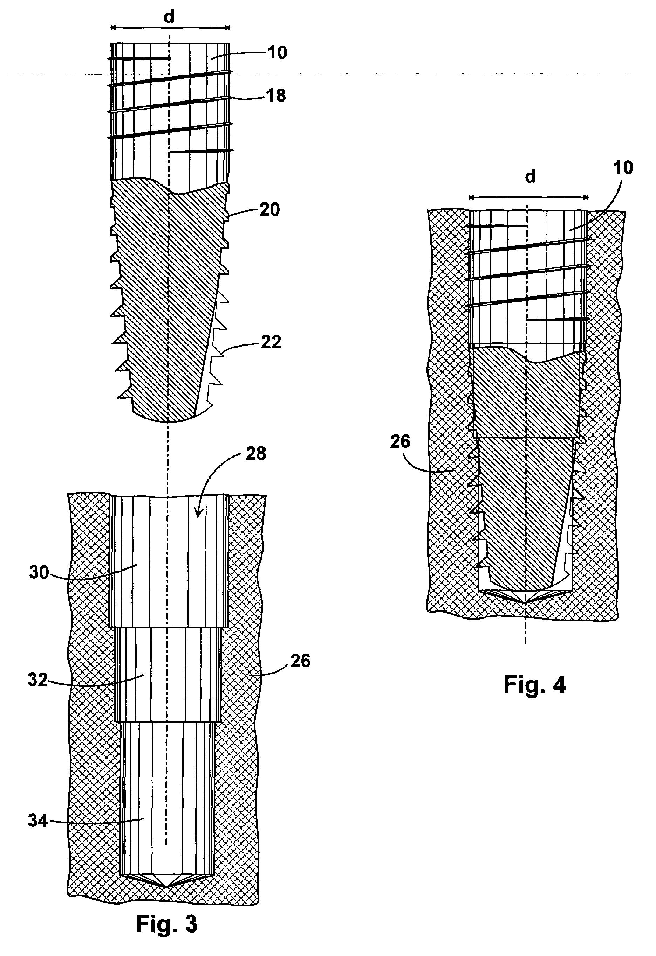

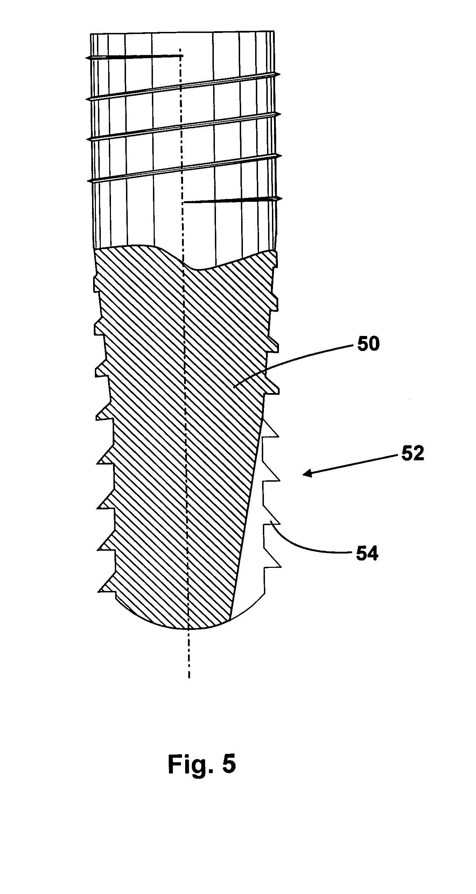

Die in Fig. 5 dargestellte zweite Ausführungsform eines erfindungsgemäßen Dentalimplantates unterscheidet sich von der ersten Ausführungsform gemäß den Fig. 1 bis 3 dadurch, dass der Grundkörper 50 im distalen Bereich 52, sowie der Außendurchmesser des Schneidgewindes 54 zylindrisch ausgebildet sind. Hierdurch wird eine bessere Anpassung des Dentalimplantates an die Stufenbohrung im Kieferknochen 26 gegeben, mit der folge, dass auch der distale Bereich erheblich zur Stabilität des Dentalimplantates beiträgt. Ein anderer Vorteil besteht darin, dass hierdurch Hohlräume vermieden werden in denen sich unerwünschte Bakterien oder dergleichen ansiedeln könnten.

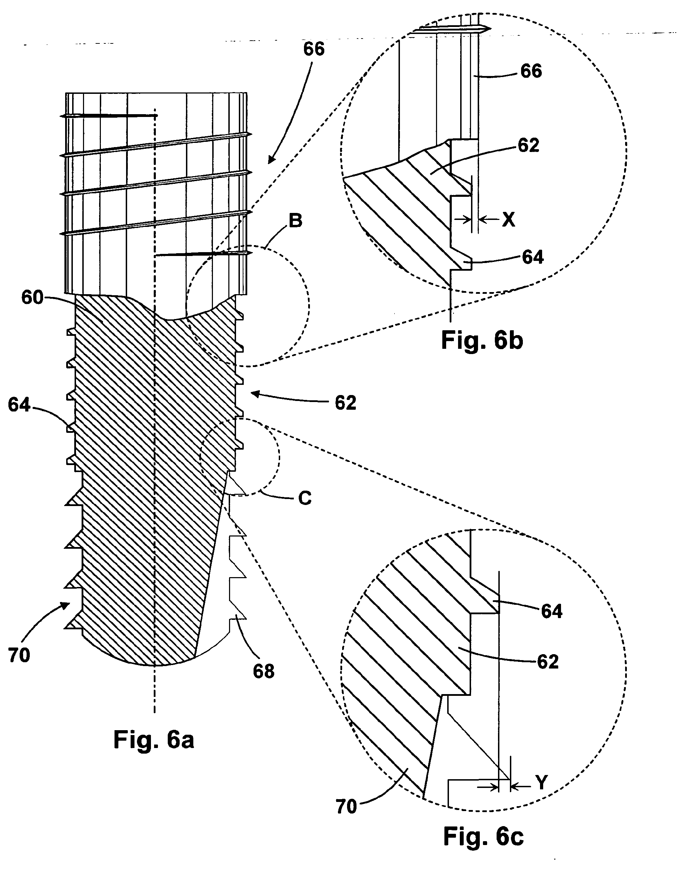

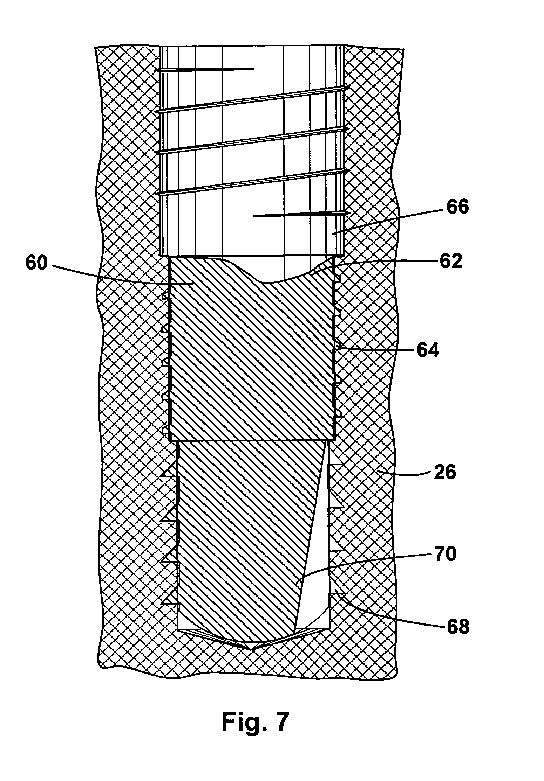

Die in den Fig. 6a, 6b, 6c und 7 dargestellte dritte Ausführungsform unterscheidet sich von der in Fig. 5 dargestellten zweiten Ausführungsform dadurch, dass hier der Grundkörper 60 im mittleren Bereich 62 ebenfalls zylindrisch ausgebildet ist, wobei auch das Kompressionsgewinde 64 außen zylindrisch geformt ist. Dabei ist der Außendurchmesser des Kompressionsgewindes 64 um 2x kleiner als der Außendurchmesser des Grundkörpers 60 im kortikalen Bereich 66 und um 2y kleiner als der Außendurchmesser des Schneidgewindes 68.

Durch dieses vergleichsweise schmale Kompressionsgewinde 64 wird erreicht, dass sich das Kompressionsgewinde 64 behutsam in die vom Schneidgewinde 68 vorbereiteten Gewindegänge einfügt, ohne durch einen zu hohen Druck auf den Kieferknochen 26 Deformationen in diesem zu bewirken. Wie Fig. 7 deutlich zeigt, fügt sich ein solches Dentalimplantat mit verkleinertem Kompressionsgewinde 64 und mit einem zylindrischem distalen Bereich 70 sehr gut in die Stufenbohrung im Kieferknochen ein, so dass die Bildung von Bakterientaschen vermieden wird unter Beibehaltung der zuverlässigen Verankerung im Kieferknochen 26.

Im Übrigen bleiben die oben genannten Vorteile bezügliches des Kortikalgewindes 18 in der zweiten und dritten Ausführungsform gemäß den Fig. 5 bis 7 erhalten.

### Bezugszeichenliste:

- 10, 50, 60: Grundkörper
- 12 52, 70: distaler Bereich
- 14 62: mittlerer Bereich
- 16 66: kortikaler Bereich
- 18: Kortikalgewinde
- 20 64: Kompressionsgewinde
- 22 54 68: Schneidgewinde
- 24: Freischnitt
- 26: Kieferknochen
- 28: Implantatbett
- 30: Zone
- 32: Zone
- 34: Zone

## Patentansprüche

1. In einen menschlichen Kiefer endostal einschraubbares Dentalimplantat zur Aufnahme und Fixierung eines Zahnersatzes, mit einem ein Außengewinde aufweisenden Grundkörper (10, 50, 60),
**dadurch gekennzeichnet,**
**dass** das Außengewinde in einem ersten Teilbereich als Schneidgewinde (22, 54, 68), in einem zweiten Teilbereich als Kompressionsgewinde (20, 64) und in einem dritten Teilbereich als Kortikalgewinde (18) ausgebildet ist, wobei das Schneidgewinde (22, 54, 68) in einem distalen Bereich (12, 52, 70) des Grundkörpers (10, 50, 60) angeordnet ist, während das Kortikalgewinde (18) in einem kortikalen Bereich (16, 66) des Grundkörpers (10, 50, 60) angeordnet ist, der in der Kortikalis des Kieferknochens (26) zur Anlage kommt, während das Kompressionsgewinde (20, 64) in einem mittleren Bereich (14, 62) zwischen dem Schneidgewinde (22, 54, 68) und dem Kortikalgewinde (18) angeordnet ist.

2. Dentalimplantat nach Anspruch 1,
**dadurch gekennzeichnet,**
**dass** das Schneidgewinde (22, 54) mit dem Kompressionsgewinde (20) zu einem zusammenhängenden Gewinde verbunden ist.

3. Dentalimplantat nach wenigstens einem der vorangehenden Ansprüche,
**dadurch gekennzeichnet,**
**dass** das Kortikalgewinde (18) als selbstschneidendes Gewinde ausgelegt ist.

4. Dentalimplantat nach wenigstens einem der vorangehenden Ansprüche,
**dadurch gekennzeichnet,**
**dass** das Kortikalgewinde (18) eine Gewindetiefe von 0,01 mm bis 0,3 mm, vorzugsweise 0,05 mm aufweist.

5. Dentalimplantat nach wenigstens einem der vorangehenden Ansprüche,
**dadurch gekennzeichnet,**
**dass** das Kortikalgewinde (18) außen zylindrisch ausgebildet ist.

6. Dentalimplantat nach wenigstens einem der vorangehenden Ansprüche,
**dadurch gekennzeichnet,**
**dass** das Kortikalgewinde (18) extendierend auf dem Grundkörper (10, 50, 60) aufgebracht ist.

7. Dentalimplantat nach wenigstens einem der vorangehenden Ansprüche,
**dadurch gekennzeichnet,**
**dass** das Kortikalgewinde als Doppelgewinde ausgebildet ist.

8. Dentalimplantat nach wenigstens einem der vorangehenden Ansprüche,
**dadurch gekennzeichnet,**
**dass** der Grundkörper (10) in seinem distalen und/oder in seinem mittleren Bereich sich konisch zum distalen Ende hin verjüngend ausgebildet ist.

9. Dentalimplantat nach Anspruch 8,
**dadurch gekennzeichnet,**
**dass** die Konizität des Grundkörpers (10) im mittleren und/oder distalen Bereich 3° bis 30°, vorzugsweise 10°, beträgt.

10. Dentalimplantat nach wenigstens einem der vorangehenden Ansprüche,
**dadurch gekennzeichnet,**
**dass** das Schneid- (22) und/oder das Kompressionsgewinde (20) außen sich konisch zum distalen Ende hin verjüngend ausgebildet ist.

11. Dentalimplantat nach Anspruch 10,
**dadurch gekennzeichnet,**
**dass** die Konizität des Schneid- (22) und/oder Kompressionsgewindes (20) 1 ° bis 5°, vorzugsweise 3°, beträgt.

12. Dentalimplantat nach wenigstens einem der vorangehenden Ansprüche,
**dadurch gekennzeichnet,**
**dass** das Schneid- (22) und/oder das Kompressionsgewinde (20) einen Flankenwinkel α von 30° bis 50°, vorzugsweise 40°, aufweist.

13. Dentalimplantat nach wenigstens einem der vorangehenden Ansprüche,
**dadurch gekennzeichnet,**
**dass** das Kortikalgewinde (18) einen Flankenwinkel β von 60° bis 90°, vorzugsweise 80°, aufweist.

14. Dentalimplantat nach wenigstens einem der vorangehenden Ansprüche,
**dadurch gekennzeichnet,**
**dass** eine zum distalen Ende hin gerichtete Flanke des Schneid - (22) und/oder Kompressionsgewindes (20) gegenüber der Längsachse einen Winkel χ von 80° bis 100°, vorzugsweise 90°, ausbildet.

15. Dentalimplantat nach wenigstens einem der vorangehenden Ansprüche,
**dadurch gekennzeichnet,**
**dass** eine zur Kortikalis hin gerichtete Flanke des Schneid- (22) und/oder Kompressionsgewindes (20) gegenüber der Längsachse einen Winkel δ von 40° bis 60°, vorzugsweise 50°, ausbildet.

16. Dentalimplantat nach wenigstens einem der vorangehenden Ansprüche,
**dadurch gekennzeichnet,**
**dass** sich das Schneidgewinde (22), das Kompressionsgewinde (20) und das Kortikalgewinde (18) jeweils über 1/3 der Gesamtlänge des Grundkörpers (10) erstreckt.

17. Dentalimplantat nach wenigstens einem der vorangehenden Ansprüche,
**dadurch gekennzeichnet,**
**dass** das im Bereich des Schneidgewindes (22) mindestens ein, vorzugsweise drei, Freischnitte (24) ausgebildet ist/sind.

18. Dentalimplantat nach Anspruch 17,
**dadurch gekennzeichnet,**
**dass** der Freischnitt (24) einen Freischnittwinkel ε von 3° bis 30°, vorzugsweise 10°, aufweist.

19. Dentalimplantat nach wenigstens einem der Ansprüche 18 oder 19,
**dadurch gekennzeichnet,**
**dass** sich der Freischnitt (24) über den gesamten distalen Bereich erstreckt.

20. Dentalimplantat nach wenigstens einem der vorangehenden Ansprüche,
**dadurch gekennzeichnet,**
**dass** der Außendurchmesser des Kompressionsgewindes (64) kleiner als der Außendurchmesser des Schneidgewindes (68) und/oder kleiner als der Außendurchmesser des Pfostenlagers ist.
